# EUROPÄISCHE PATENTANMELDUNG

(11) **EP 4 545 228 A2**
(43) Veröffentlichungstag der Anmeldung: **30.04.2025**
(21) Anmeldenummer: 24206427.7
(22) Anmeldetag: 14.10.2024
(51) Int. Cl.: B23C 3/00, B23C 5/08, B23C 3/12, B23C 5/12

(54) **HOBELVORRICHTUNG UND MASCHINE ZUR HERSTELLUNG EINER ROHRINNENWANDKONTUR, ROHR UMFASSEND EINE ROHRINNENWANDKONTUR UND VERFAHREN ZUR HERSTELLUNG EINER ROHRINNENWANDKONTUR**

(30) Priorität: 23.10.2023 DE 102023129037
(71) Anmelder: Simona AG, 55606 Kirn (DE)
(72) Erfinder: Wobito, Holger, 45257 Essen (DE); Baumann, Edwin, 77955 Ettenheimweiler (DE); Stallmann, Marco, 55627 Merxheim (DE); Christ, Dieter, 55618 Simmertal (DE)
(74) Vertreter: advotec.

(57) **Zusammenfassung**

Die Erfindung betrifft eine Hobelvorrichtung (10) zur Herstellung einer Rohrinnenwandkontur (05), umfassend mindestens ein Stichelmesser (17), wobei das Stichelmesser (17) um eine Mittelachse (27) rotierbar ist, wobei das Stichelmesser (17) mindestens eine Seitenfläche und eine Schneidkante umfasst, und wobei das Stichelmesser (17) derart angeordnet ist, dass die Seitenfläche der Rotationsrichtung (28) abgewandt ist, wobei die Hobelvorrichtung (10) mindestens ein Versteifungselement (12) umfasst, wobei das Versteifungselement (12) um die Mittelachse (27) rotierbar ist, und wobei das Stichelmesser (17) zumindest teilweise an der Seitenfläche zum Versteifungselement (12) festgelegt ist und die Schneidkante eine der herzustellenden Rohrinnenwandkontur (05) entsprechende Schneidkontur aufweist. Des Weiteren betrifft die Erfindung eine Maschine (20) umfassend mindestens eine Hobelvorrichtung (10), ein Rohr (01) umfassend mindestens eine Rohrinnenwandkontur (05), hergestellt mit einer Hobelvorrichtung (10), sowie ein Verfahren zur Einbringung einer Rohrinnenwandkontur (05) in ein Rohr (01).

## Beschreibung

Die Erfindung betrifft eine Hobelvorrichtung gemäß Anspruch 1 und eine Maschine gemäß Anspruch 11 zur Herstellung einer Rohrinnenwandkontur, ein Rohr umfassend eine Rohrinnenwandkontur gemäß Anspruch 13 und Anspruch 14 und ein Verfahren zur Herstellung einer Rohrinnenwandkontur gemäß Anspruch 15.

Beim Stumpfschweißen von Rohren, wie beispielsweise von Kunststoffrohren, die insbesondere aus Polyethylen oder Polypropylen hergestellt sind, werden die Rohrenden mit geeigneten Heizvorrichtungen erhitzt und anschließend axial gegeneinander gefahren, so dass das Material im Bereich der Stirnseiten stoffschlüssig miteinander verschmilzt und eine dichte Verbindung zwischen den beiden Rohrenden erzeugt wird. Derartige Rohrverbindungen können insbesondere zur Herstellung von Wasserleitungen, Abwasserleitungen oder Kabelschutzrohren eingesetzt werden. Um ein exaktes Schweißergebnis zu erzielen, ist es erforderlich, dass die Stirnseiten der Rohre vor dem Verschweißen in einer Weise bearbeitet werden, dass sich eine ebene Kontaktfläche an der Stirnseite ergibt. Unebene Stirnseiten führen dagegen zu unregelmäßigen Schweißnähten und gegebenenfalls zu hohen Undichtigkeiten. Ein weiteres Problem beim Stumpfschweißen der Rohre stellt die Bildung von Schweißwülsten, insbesondere an der Rohrinnenseite, dar. Diese Schweißwülste ergeben sich durch die Verdrängung des fließfähigen Kunststoffs während des Schweißvorgangs. An der Innenseite des Rohrs ragt dieser Schweißwulst dann in das Rohr hinein und verengt den Rohrquerschnitt. Außerdem können sich Schmutz und Schwebstoffe in unerwünschter Weise an solchen innenseitigen Schweißwülsten ablagern und zu Störungen in der Rohrleitung führen. Auch die Schweißwülste an der Außenseite sind, abhängig vom Einsatzzweck, vielfach unerwünscht. Um diese Störungen zu minimieren, ist es bekannt, an der Rohrinnenwand Rohrinnenwandkonturen einzubringen, in denen die Wandstärke reduziert ist.

Die Rohrinnenwandkonturen und/oder die ebenen Kontaktflächen können im Rahmen der Herstellung der Rohre im Herstellungswerk problemlos hergestellt werden. Schwieriger dagegen ist die Herstellung der Rohrinnenwandkonturen und/oder der ebenen Kontaktflächen im Bereich der jeweiligen Baustellen, da hier nur transportable und relativ einfache Maschinen eingesetzt werden können. Allerdings ist die Herstellung der Rohrinnenwandkonturen und/oder der ebenen Kontaktflächen an den Rohrenden der Rohre baustellenseitig vielfach unvermeidlich, da die Rohre beim Bau einer Rohrleitung vielfach gekürzt werden müssen. Bei fehlerhafter Ausführung dieser Arbeiten besteht die Gefahr, dass für das Stumpfschweißen schlecht oder gar ungeeignete Rohre hergestellt und verwendet werden. Die mit diesen Rohren hergestellten Verbindungen können zu Störungen und Brüchen im Rohrsystem führen.

Aus der DE 10 2022 100 348 sind ein Verfahren und eine Hobelvorrichtung zur Herstellung einer ebenen Kontaktfläche und einer Rohrinnenwandkontur bzw. einer Rohraußenwandkontur in Form eines Materialrücksprungs bekannt. Die Herstellung der Rohrinnenwandkontur bzw. der Rohraußenwandkontur erfolgt mittels eines Stichelmessers, das in radialer Richtung bewegbar ist. Nachteilhaft an dieser Vorrichtung ist, dass zur Herstellung einer komplexeren Rohrinnenwandkontur oder zur flexiblen Herstellung einer Rohrinnenwandkontur entweder das Stichelmesser auf aufwendige Weise ausgetauscht werden muss oder eine Handführung bzw. Programmierung einer Maschinenführung des Stichelmessers notwendig ist. Außerdem ist aufgrund der Ausrichtung die gezielte Abfuhr des angetragenen Materials nur unzureichend möglich. Aufgrund von fertigungstechnischen Schwankungen in der Rohrwandstärke und nicht vollständig auszuschließendem Spiel in der Lagerung des Stichelmessers und/oder der Rohre kann es zu einem Verkanten des Messers und/oder des Hobels kommen. Weiter ist nachteilhaft, dass die Ausführung mit lediglich einem Stichelmesser eine erhebliche und ungleichmäßige Belastung für den Motor darstellt, insbesondere wenn ein zu tiefer Eingriff in die Rohrwand erfolgt. Die Hand- und/oder Maschinenführung birgt zudem die Gefahr, dass das Rohr durch zu großen und/oder zu tiefen Abrieb zerstört wird. Es besteht daher ein großer Bedarf an einer langlebigen und einfach zu bedienenden, jedoch schnell und einfach an das Rohr anpassbaren Hobelvorrichtung sowie an einem Verfahren zum Betreiben dieser.

Aufgabe der vorliegenden Erfindung ist es, eine Vorrichtung und ein Verfahren zur Bearbeitung von zum Stumpfschweißen geeigneten Rohren vorzuschlagen, die bzw. das die negativen Einflüsse des beim Verschweißen der Rohre gebildeten innenseitigen und/oder außenseitigen Schweißwulsts reduziert bzw. gänzlich vermeidet. Die Vorrichtung und das Verfahren sollen insbesondere zur Durchführung der baustellenseitigen Vorbereitung der Rohre geeignet und zuverlässig durchführbar sein. Ein weiteres Augenmerk liegt auf zum Stumpfschweißen geeigneten und sicheren Rohren.

Vorteilhafte Ausführungsformen der Erfindung sind Gegenstand der Unteransprüche.

Erfindungsgemäß ist eine Hobelvorrichtung zur Herstellung einer Rohrinnenwandkontur vorgeschlagen, wobei die Hobelvorrichtung mindestens ein Stichelmesser umfasst. Das Stichelmesser ist um eine Mittelachse rotierbar, umfasst mindestens eine Seitenfläche und eine Schneidkante und ist derart angeordnet, dass die Seitenfläche der Rotationsrichtung abgewandt ist. Die Hobelvorrichtung ist dadurch gekennzeichnet, dass die Hobelvorrichtung mindestens ein um die Mittelachse rotierbares Versteifungselement umfasst, wobei das Stichelmesser zumindest teilweise an der Seitenfläche zum Versteifungselement festgelegt ist und die Schneidkante eine der herzustellenden Rohrinnenwandkontur entsprechende Kontur aufweist.

Die erfindungsgemäße Hobelvorrichtung beruht auf dem Grundgedanken, dass die einseitige Belastung des im Stand der Technik sehr dünn ausgestalteten Stichelmessers während der Bearbeitung des Rohrs zur Einbringung der Rohrinnenwandkontur durch die flächige Anlage der Seitenfläche an dem Versteifungselement eine das Stichelmesser schonende Versteifung erhält. Weiter verhindert die Versteifung ein Verkanten des Stichelmessers, da ein größeres Drehmoment auf dieses ausgeübt werden kann. Schwankungen in der Rohrwand können daher einfach durch einen nun ermöglichten tieferen Eingriff ausgeglichen werden. Dabei ragt zumindest die Schneidkante in radialer Richtung über das Versteifungselement hinaus und greift in die Rohrinnenwand ein, um auf diese Weise die Rohrinnenwandkontur auszubilden. Weiter legt das Versteifungselement das Stichelmesser gegenüber der Rohrwand fest, so dass keine fehlerhafte Kontur eingebracht werden kann. Das Stichelmesser kann nicht mehr unvorhergesehen durch einen Bedienfehler zu tief in die Rohrwand eindringen. Um eine bereichsweise unterschiedlich ausgestaltete Kontur auszuarbeiten, weist das Stichelmesser eine Schneidkontur auf, die der herzustellenden Rohrinnenwandkontur entspricht.

Die Hobelvorrichtung umfasst das Stichelmesser und das Versteifungselement, das um eine Mittelachse der Hobelvorrichtung bzw. eine Mittelachse der die Hobelvorrichtung aufnehmenden und an anderer Stelle beschriebenen Maschine rotiert. Das Stichelmesser hat eine außenliegende Schneidkante, die, wenn es in Kontakt mit der Rohrinnenwand kommt, durch Materialabtragung eine Rohrinnenwandkontur in diese einbringt. Die Materialabtragung erfolgt durch die Rotationsbewegung relativ zur Rohrinnenwand, bevorzugt durch eine spanende Technik. Die Materialabtragung kann dabei insbesondere durch Schneiden, Schaben, Hobeln und/oder Senken erfolgen, sofern diese Verfahren mit der erfindungsgemäßen Maschine ausführbar sind.

Wie oben beschrieben, verursacht das Versteifungselement die nötige Versteifung, so dass das Stichelmesser während des Materialabtrags nicht verbogen wird. Gleichzeitig legt das Versteifungselement das Stichelmesser in seiner Position zur Mittelachse fest, um auf diese Weise Bedienungsfehler zu verhindern. Da das Stichelmesser durch die erfindungsgemäße Ausgestaltung nicht in radialer Richtung beweglich gelagert werden muss, kann es zusammen mit dem Versteifungselement oder Teilen des Versteifungselements durch einfach verbindbare und lösbare Verbindungen an der Hobelvorrichtung und/oder einer die Hobelvorrichtung aufnehmenden Maschine angebracht werden. Dies erleichtert die Reparatur und Wartung der Hobelvorrichtung.

Um eine Rohrinnenwandkontur in ein Rohr einzubringen, wird die Hobelvorrichtung mit der Mittelachse zur Mittelachse des Rohrs ausgerichtet, und das Stichelmesser und das Versteifungselement werden in Rotation versetzt. Anschließend wird die Hobelvorrichtung entlang der Mittelachse in Richtung des Rohrs geführt und/oder das Rohr entlang der Mittelachse in Richtung der Hobelvorrichtung geführt. Das Stichelmesser kommt dabei mit der Rohrinnenwand derart in Kontakt, dass eine Materialabtragung erfolgt, die der Schneidkontur entspricht. Die Hobelvorrichtung wird so lange in Richtung der Rohrinnenwand geführt, bis die Rohrinnenwandkontur in der gewünschten Tiefe eingebracht worden ist.

Die Rohrinnenwandkontur selbst kann insbesondere dazu dienen, einen Aufnahmeraum zu schaffen, in dem die beim Stumpfschweißen entstehenden Schweißwulste aufgenommen werden. Dadurch wird der unerwünschte Einfluss der innenseitigen Schweißwülste reduziert bzw. gänzlich eliminiert.

Mittels der Erfindung wird es ermöglicht, eine einfach und sicher zu bedienende, langlebige und dennoch kompakte Hobelvorrichtung zur Einbringung von korrekten Rohrinnenwandkonturen bereitzustellen. Die Hobelvorrichtung ist zudem einfach zu warten, anzupassen und zu reparieren.

Der Begriff "Stichelmesser" betrifft eine Vorrichtung mit mindestens einer Schneidkante, die geeignet ist, einen Materialabtrag an der Rohrinnenwandung durch eine spanende Technik vorzunehmen.

Die Begriffe "Mittelachse", "radiale Richtung" und "Rotationsrichtung" beziehen sich auf die entsprechenden Koordinaten eines Zylinderkoordinatensystems, entlang derer die Richtungen und/oder die Achse verlaufen oder zu denen die Richtungen und/oder die Achse parallel verlaufen.

Es ist denkbar, dass das Versteifungselement eine scheibenförmige Grundform aufweist. Die scheibenförmige Ausgestaltung der Grundform bewirkt eine besonders hohe Versteifung und eine gleichmäßige Belastung des Antriebs, der die Rotationsbewegung verursacht.

In einer Ausgestaltung der Erfindung ist es denkbar, dass die Grundform des Versteifungselements blockförmig ausgestaltet ist. Die blockförmige Ausgestaltung ist eine besonders einfache, aber dennoch ausreichend steife Ausgestaltung. Das Stichelmesser ist dabei an einer Seitenfläche des Blocks in Rotationsrichtung angeordnet. Besonders bevorzugt ist es denkbar, dass das Versteifungselement mehrteilig mit mehreren Blöcken ausgestaltet ist und/oder die Hobelvorrichtung mindestens zwei, drei, vier, fünf, sechs, sieben, acht, neun oder zehn blockförmige Versteifungselemente umfasst.

Weiter ist es denkbar, dass die Grundformen des Versteifungselements und weiter bevorzugt des Stichelmessers plattenförmig ausgestaltet sind, wobei das Stichelmesser und das Versteifungselement senkrecht aufeinander stehen. Besonders bevorzugt ist das Versteifungselement im oberen Drittel des Stichelmessers angeordnet. Das obere Drittel ist auf die axiale Richtung bezogen, wobei das obere Drittel von der Hobelvorrichtung abgewandt ist. Da die Belastung des Stichelmessers insbesondere im oberen Bereich auftritt, ist eine plattenförmige Ausgestaltung des Versteifungselements ausreichend, um dem Stichelmesser die benötigte Stabilität zu geben. Besonders bevorzugt ist es denkbar, dass das Versteifungselement mehrteilig mit mehreren Platten ausgestaltet ist und/oder die Hobelvorrichtung mindestens zwei, drei, vier, fünf, sechs, sieben, acht, neun oder zehn blockförmige Versteifungselemente umfasst.

Weiter bevorzugt umfasst das Versteifungselement eine Fase an der von der Hobelvorrichtung weg weisenden und radial nach außen weisenden Kante. Das Stichelmesser ragt besonders bevorzugt über die Fase hinaus. Hierdurch wird ein Verkeilen des Stichelmessers besonders effektiv verhindert. Weiter bevorzugt umfasst das Versteifungselement einen Vorsprung, insbesondere an der Seitenfläche des Blocks in Rotationsrichtung. An dem Vorsprung kann das Stichelmesser radial abgestützt und dadurch stabilisiert werden.

Der Begriff "Grundform" betrifft die generelle Ausgestaltung des Versteifungselements, wobei denkbare, designbedingte, kennzeichnungsbedingte, technisch bedingte und/oder technisch vorteilhafte Ausnehmungen, Fasen und/oder Vorsprünge bei der Kategorisierung der Grundform vernachlässigt werden.

Der Begriff "blockförmig" betrifft die Grundform des Versteifungselements, die ein Block ist, wobei zur Bestimmung der Grundform Fasen, Vorsprünge, Ausnehmungen und/oder Abrundungen vernachlässigt werden.

Der Begriff "plattenförmig" betrifft die Grundform des Versteifungselements und des Stichelmessers, wobei "plattenförmig" ein flaches, in der Ebene ausgebreitetes Bauteil mit einer im Verhältnis zur Dicke sehr ausgedehnten ebenen Fläche bezeichnet.

In einer Ausgestaltung der Erfindung ist es denkbar, dass das Versteifungselement mehrteilig mit mindestens einem Modul und einem Grundkörper ausgestaltet ist, wobei die Schneidkante des Stichelmessers außenliegend an dem Modul angeordnet ist, wobei das Modul eine innenliegende Aussparung mit einer Innenkontur aufweist und wobei der Grundkörper eine außenliegende Außenkontur aufweist und wobei die Innenkontur und die Außenkontur lösbar und kraftübertragend verbindbar sind. Grundgedanke dieser Ausgestaltung ist es, eine schnelle Austauschbarkeit des Stichelmessers zu ermöglichen. Der Grundkörper des Versteifungselements verbleibt dabei an der Hobelvorrichtung und/oder an der die Hobelvorrichtung aufnehmenden Maschine, während das Modul mit dem Stichelmesser durch die lösbare Verbindung einfach vom Grundkörper entfernt oder am Grundkörper montiert werden kann. Durch die kraftübertragende Ausgestaltung der Verbindung kann die Rotation und damit auch das Drehmoment vom Grundkörper über das Modul auf das Stichelmesser übertragen werden und das Stichelmesser zu seinem vorgesehenen Einsatzzweck genutzt werden. Die Austauschbarkeit kann zur Reparatur- und/oder Wartungszwecken erfolgen, beispielsweise wenn das Stichelmesser verschlissen und/oder beschädigt ist. Darüber hinaus ist es ebenfalls bevorzugt denkbar, dass die Hobelvorrichtung mindestens 2, 3, 4, 5, 6, 7, 8, 9, 10, 11, 12, 13, 14, 15, 16, 17, 18, 19 oder 20 Module, bevorzugt unterschiedlich ausgestaltete Module und/oder Module mit unterschiedlich ausgestalteten Stichelmessern, umfasst, wobei die Module eine identisch ausgestaltete Innenkontur aufweisen. Die einzelnen Module sind dabei an verschiedene Rohrtypen, insbesondere mit unterschiedlichen Materialien, Durchmessern und/oder Wandstärken, angepasst. Weiter können die Module unterschiedlich ausgestaltete Schneidkonturen aufweisen. Es kann ein passendes Modul für das zu bearbeitende Rohr und/oder die gewünschte Rohrinnenwandkontur ausgewählt werden und auf diese Weise eine schnelle und einfache Anpassbarkeit der Hobelvorrichtung erreicht werden. Eine besonders bevorzugte Ausgestaltung der Innenkontur und der Außenkontur ist kreisförmig und/oder kreissegmentförmig, wobei die Innenkontur mit mindestens einem Vorsprung und die Außenkontur mit mindestens einer an den Vorsprung angepassten Ausnehmung ausgestaltet ist und/oder die Außenkontur mit mindestens einem Vorsprung und die Innenkontur mit mindestens einer an den Vorsprung angepassten Ausnehmung ausgestaltet ist.

In einer Ausgestaltung der Erfindung ist es denkbar, dass die Hobelvorrichtung eine Planscheibe umfasst, wobei die Planscheibe mindestens eine Fassung zur Aufnahme des Versteifungselements umfasst. Die Planscheibe ist derart ausgestaltet, dass sie an einem anderen Teil der Hobelvorrichtung montierbar ist. Insbesondere sind in der Planscheibe Öffnungen, in welchen Befestigungsmittel, insbesondere Schrauben, anordenbar sind, die die Planscheibe an dem anderen Teil der Hobelvorrichtung halten. Die Fassung nimmt das Versteifungselement mit dem Stichelmesser auf. Besonders bevorzugt nimmt die Fassung das Versteifungselement vollständig auf, sodass ein planer Abschluss mit der Planscheibe ausgebildet wird. Dadurch kann das Stichelmesser insbesondere zu Reparaturzwecken oder zur beliebigen Auswahl einer Schneidkontur beziehungsweise einer Rohrinnenwandkontur ausgewechselt werden. Besonders bevorzugt umfasst das Versteifungselement mindestens eine Ausnehmung zur Aufnahme eines Haltemittels, insbesondere einer Schraube. Weiter bevorzugt ist die Ausnehmung derart ausgebildet, dass das Haltemittel vollständig aufgenommen wird und plan mit dem Versteifungselement abschließt. Mittels des Haltemittels kann das Versteifungselement an der Planscheibe montiert werden. Weiter bevorzugt umfasst das Versteifungselement Konturen zur leichteren Montage an der Planscheibe. Besonders bevorzugt umfasst das Versteifungselement eine Abrundung in radialer Richtung, wobei die Abrundung in Richtung der Rotationsachse weist.

Überdies ist es denkbar, dass das Stichelmesser mindestens ein erstes Schneidelement und mindestens ein zweites Schneidelement umfasst, wobei an dem ersten Schneidelement ein erster Anschnitt der Schneidkontur ausgebildet ist und an dem zweiten Schneidelement ein zweiter Abschnitt der Schneidkontur ausgebildet ist. Auf diese Weise wird die Rohrinnenwandkontur in die Rohrinnenwand durch zwei oder mehr Schneidelemente eingebracht. Dies bewirkt einerseits, dass durch die vorherige Auswahl der Schneidelemente eine beliebig ausgestaltete Rohrinnenwandkontur herstellbar ist. Auch ist es denkbar, dass der erste Abschnitt eine erste Stufe umfasst und der zweite Abschnitt eine zweite Stufe umfasst, wobei der Umfang der ersten Stufe größer ist als der Umfang der zweiten Stufe. Zunächst kommt der zweite Abschnitt mit der Rohrinnenwand in Kontakt und verursacht einen zweiten Materialabtrag, anschließend kommt der erste Abschnitt mit der Rohrinnenwand in Kontakt und verursacht einen zweiten Materialabtrag, während der zweite Abschnitt tiefer entlang der Mittelachse eindringt und dort einen weiteren ersten Materialabtrag verursacht. Diese stufenweise Abtragung schont Stichelmesser und Rohr. Weiter ist die Reparatur und/oder die Wartung des Stichelmessers vereinfacht, da nur das beschädigte und/oder verschlissene Schneidelement ausgetauscht werden muss. Bevorzugt umfasst die Hobelvorrichtung mindestens 2, 3, 4, 5, 6, 7, 8, 9, 10, 11, 12, 13, 14, 15, 16, 17, 18, 19 oder 20 Schneidelemente.

Es ist weiterhin denkbar, dass die Hobelvorrichtung mindestens zwei gleich oder unterschiedlich ausgestaltete Stichelmesser umfasst, wobei die Stichelmesser regelmäßig um den Umfang des Versteifungselements verteilt sind. Durch die gleichmäßige Verteilung der Stichelmesser heben sich die in radialer Richtung auf den die Rotation verursachenden Antrieb wirkenden Scherkräfte teilweise oder vollständig gegenseitig auf. Dies reduziert die Belastung und die Ausfallwahrscheinlichkeit des Antriebs. Weiter wird eine bessere Ausrichtung von Rohr und Hobelvorrichtung entlang der jeweiligen Mittelachsen ermöglicht, so dass die Gefahr des Verkantens des Stichelmessers noch weiter reduziert wird. Es ist ebenso denkbar, dass die an anderer Stelle beschriebenen Schneidelemente regelmäßig um den Umfang des Versteifungselements verteilt sind. Eine regelmäßige Verteilung betrifft eine Verteilung, bei der sich die auf den Antrieb wirkenden Scherkräfte aufheben, insbesondere eine Verteilung, bei der der Abstand zwischen zwei benachbarten Stichelmessern und/oder Schneidelementen für alle Stichelmesser und/oder Schneidelemente gleich groß ist. Bevorzugt wird die regelmäßige Verteilung der Stichelmesser und/oder der Schneideelemente dadurch herbeigeführt, dass die an anderer Stelle beschriebenen Fassungen regelmäßig um den Umfang einer an anderer Stelle beschriebenen Planscheibe angeordnet werden.

In einer weiteren Ausgestaltung ist es denkbar, dass das Versteifungselement mindestens ein Hobelmaul in Rotationsrichtung vor dem Stichelmesser umfasst. Durch das Hobelmaul kann das von der Rohrinnenwand abgetragene Material, das den weiteren Abtragungsprozess stören und/oder behindern könnte, gezielt weggeleitet werden. Das Hobelmaul kann durch einen durch das Versteifungselement und/oder durch eine an anderer Stelle beschriebene Planscheibe durchgehenden Durchbruch und/oder durch eine in das Versteifungselement und/oder in die Planscheibe eingebrachte Vertiefung ausgebildet sein.

Überdies ist es denkbar, dass die Schneidkante in einem Schneidwinkel zwischen 10° und 90° zur Rotationsrichtung angeordnet ist. Ein kleinerer Winkel bewirkt, dass das Material des Rohrs bei der Abtragung geschnitten wird, wodurch eine glattere Abtragungsfläche entsteht. Je größer der Winkel ist, desto mehr Material lässt sich gleichzeitig abtragen und desto geringer ist die Wahrscheinlichkeit, dass sich das Stichelmesser verkeilt. Der Schneidwinkel ist der Winkel, der zwischen Rotationsrichtung und Schneidkante ausgebildet ist.

Es ist weiterhin denkbar, dass die Schneidkontur zumindest bereichsweise gekrümmt, gerade und/oder polygonförmig verläuft. Der Verlauf wird insbesondere durch den späteren Einsatzzweck der Rohrinnenwandkontur geprägt. In einer bevorzugten Weiterbildung ist es denkbar, dass die Schneidkontur einen ersten Bereich umfasst, in dem die Schneidkontur parallel zur Rotationsachse verläuft, dass die Schneidkontur einen zweiten Bereich umfasst, der sich an den ersten Bereich anschließt und in dem die Schneidkontur senkrecht zur Rotationsrichtung verläuft, und dass die Schneidkontur einen dritten Bereich umfasst, der sich an den zweiten Bereich anschließt und in dem die Schneidkontur in einem Konturwinkel von mehr als 0° und weniger als 90° verläuft. Der erste Bereich schließt sich dabei an das Rohrende des Rohrs an und dient dazu, die beim Stumpfschweißen entstehenden Schweißwülste innenseitig aufzunehmen. Der zweite Bereich begrenzt die Ausbreitung der Schweißwülste seitlich. Der dritte Bereich dient dem Ableiten von Kräften während des Stumpfschweißens und während des späteren Einsatzes des Rohrs. Hierdurch wird insbesondere die durch das Stumpfschweißen gebildete Verbindung gestärkt.

Es ist weiterhin denkbar, dass die Hobelvorrichtung ein Hobelmesser und/oder eine Fräseinheit zur Herstellung einer ebenen Kontaktfläche am Rohrende umfasst, wobei das Versteifungselement eine Eingriffsausnehmung umfasst, die oberhalb des Hobelmessers angeordnet ist. Durch die ebene Kontaktfläche am Rohrende können besonders hochwertige, das heißt dichte und/oder belastbare, Verbindungen durch Stumpfschweißen hergestellt werden. Durch die zumindest phasenweise zeitgleich erfolgende Bearbeitung des Rohrendes zur Herstellung der ebenen Kontaktfläche und zur Herstellung der Rohrinnenwandkontur wird die erforderliche Bearbeitungszeit zur Bearbeitung des Rohrendes nicht wesentlich erhöht, so dass in Summe eine Zeitersparnis erfolgt. Die Eingriffsausnehmung ermöglicht den Zugriff auf das Hobelmesser und/oder die Fräseinheit, ohne dass das Versteifungselement und/oder der Grundkörper des Versteifungselements von der Hobelvorrichtung entfernt werden muss. Besonders bevorzugt ist die Fräseinheit auf einer an anderer Stelle beschriebenen Planscheibe angeordnet.

Es wird davon ausgegangen, dass die Definitionen und/oder die Ausführungen der oben genannten Begriffe für alle in dieser Beschreibung im Folgenden beschriebenen Aspekte gelten, sofern nichts anderes angegeben ist.

Erfindungsgemäß ist weiterhin eine Maschine vorgeschlagen, wobei die Maschine mindestens eine an anderer Stelle beschriebene Hobelvorrichtung umfasst. Mit der Maschine können die ebenfalls beschriebenen Vorteile der Hobelvorrichtung erreicht werden.

Dabei ist es denkbar, dass die Maschine eine um die Mittelachse rotierende Planscheibe umfasst, wobei beidseitig der Planscheibe jeweils eine Hobelvorrichtung angeordnet ist. Hierdurch können zwei Rohre gleichzeitig oder kurzzeitig nacheinander bearbeitet werden. Besonders vorteilhaft umfasst die Maschine weiter eine Heizquelle. Mittels der Heizquelle können die zwei bearbeiteten Rohre an der Maschine ohne Umlagerungsarbeiten stumpfverschweißt werden.

Um zuverlässig eine ebene Kontaktfläche und/oder die gewünschte Rohrinnenwandkontur herstellen zu können, ist es besonders vorteilhaft, wenn die Hobelvorrichtung drehbar an einem Maschinengrundkörper gelagert ist. Am Maschinengrundkörper seinerseits sind zwei Führungselemente vorzusehen, mit denen der Maschinengrundkörper auf zwei parallel verlaufende Stützelemente, beispielsweise zwei Leitachsen, aufgelegt werden kann. Mit dieser einfachen Anordnung kann dann der Maschinengrundkörper in Richtung der Längsachse der Führungsbolzen verschoben werden, um den erforderlichen Vorschub des Hobelmessers und des Stichelmessers zur Herstellung der ebenen Kontaktfläche bzw. des gewünschten Materialrücksprungs zu realisieren. Alternativ oder zusätzlich können ein Rohr oder beide zu verschweißende Rohre mittels einer Führungsvorrichtung in Richtung des Grundkörpers verschoben werden. Weiter ist es vorteilhaft, wenn die Hobelvorrichtung und oder die Planscheibe an einem der Führungselemente oder an der Führungsvorrichtung schwenkbar und/oder abnehmbar gelagert ist. Auf diese Weise kann die Hobelvorrichtung seitlich verschwenkt und/oder abgenommen werden, und die Rohre können mit den Rohrenden in Kontakt gebracht und in der Maschine stumpfverschweißt werden, ohne dass die Rohre umgelagert werden müssen. Dies beschleunigt den Stumpfschweißvorgang.

In einer Weiterbildung der Erfindung ist es denkbar, dass die Maschine eine Sensorik umfassend mindestens einen Sensor zur Abmessung mindestens eines Rohrendes, mindestens einer Rohrinnenwandkontur und/oder einer Verbindung zweier Rohrenden umfasst. Mittels der Sensorik kann überprüft werden, ob das Rohr defektfrei ist, korrekt in der Maschine aufgenommen ist, die Innenkontur fehlerfrei und vollständig eingebracht worden ist und/oder die Verbindung zwischen zwei Rohren korrekt, vollständig und dicht ausgeführt worden ist. Der Sensor kann hierfür eine Dicke, insbesondere des Rohrendes und/oder der Verbindung, und/oder einen Abstand erfassen.

Erfindungsgemäß ist weiterhin ein Rohr vorgeschlagen, wobei das Rohr eine Rohrinnenwandkontur aufweist, die mit einer an anderer Stelle beschriebenen Hobelvorrichtung hergestellt worden ist. Das Rohr weist dabei die an anderer Stelle beschriebenen Vorteile auf.

Erfindungsgemäß ist weiterhin ein Rohr umfassend mindestens eine Rohrinnenwandkontur vorgeschlagen, das dadurch gekennzeichnet ist, dass die Rohrinnenwandkontur einen sich an ein Rohrende anschließenden ersten Bereich umfasst, wobei die Rohrinnenwandkontur in dem ersten Bereich parallel zur Rohrwand verläuft. Weiter umfasst die Rohrinnenwandkontur einen sich an den ersten Bereich anschließenden zweiten Bereich, wobei die Rohrinnenwandkontur in dem zweiten Bereich senkrecht zur Rohrwand verläuft. Zudem umfasst die Rohrinnenwandkontur einen sich an den zweiten Bereich anschließenden dritten Bereich, wobei die Rohrinnenwandkontur in dem dritten Bereich in einem Konturwinkel zur Rohrwand von mehr als 0° und weniger als 90° verläuft. Der erste Bereich dient dazu, die beim Stumpfschweißen entstehenden Schweißwülste innenseitig aufzunehmen. Der zweite Bereich begrenzt die Ausbreitung der Schweißwülste seitlich. Der dritte Bereich dient dem Ableiten von Kräften während des Stumpfschweißens und während des späteren Einsatzes des Rohrs. Hierdurch wird insbesondere die durch das Stumpfschweißen gebildete Verbindung gestärkt.

Weiter erfindungsgemäß ist ein Verfahren zur Einbringung einer Rohrinnenwandkontur in ein Rohr vorgeschlagen, wobei das Verfahren folgende Schritte umfasst:
a. Bereitstellen einer an anderer Stelle beschriebenen Maschine und mindestens eines Rohrs mit einer Mittelachse;
b. Ausrichten der Mittelachsen des Rohrs und der Hobelvorrichtung;
c. In Kontakt Bringen von Rohr und Hobelvorrichtung und Rotieren der Hobelvorrichtung; und
d. Bewegen der Hobelvorrichtung entlang der Mittelachsen in Richtung des Rohrs, Einbringen der Rohrinnenwandkontur in der Rohrinnenwand mit dem Stichelmesser und Erhalten der Rohrinnenwandkontur.

Mittels dieses Verfahrens sind die an anderer Stelle zur Maschine beziehungsweise zur Hobelvorrichtung beschriebenen Vorteile erreichbar.

In einer Ausgestaltung ist es denkbar, dass der Schritt a. ein Auswählen eines Moduls und Verbinden des ausgewählten Moduls mit dem Grundkörper umfasst. Um dies zu ermöglichen, ist das Versteifungselement, wie an anderer Stelle beschrieben, mehrteilig ausgestaltet und umfasst mindestens zwei unterschiedlich ausgestaltete Module und einen mit der Hobelvorrichtung und/oder der Maschine verbundenen Grundkörper. Auf diese Weise ist die das Verfahren ausführende Maschine an verschiedene Rohrtypen, insbesondere an Rohrtypen mit unterschiedlichen Materialien, Durchmessern und/oder Wandstärken, anpassbar.

Es ist denkbar, dass der Schritt a. ein Auswählen mindestens eines Schneidelements und ein Zusammensetzen des Stichelmessers umfasst. Wie an anderer Stelle beschrieben, umfasst die Hobelvorrichtung, auf der das Verfahren ausgeführt wird, zur Ermöglichung dieser Ausgestaltung bevorzugt mindestens zwei Schneidelemente, die jeweils einen Abschnitt der Schneidkontur bilden. Hierdurch kann eine beliebige Rohrinnenwandkontur geschaffen werden.

In einer Ausgestaltung der Erfindung ist es denkbar, dass der Schritt a. ein Auswählen mindestens eines Stichelmessers und eines Versteifungselements und Montieren des Versteifungselements mit dem Stichelmesser in einer Fassung umfasst. Wie an anderer Stelle beschrieben, umfasst die Hobelvorrichtung, auf der das Verfahren ausgeführt wird, bevorzugt eine Planscheibe mit mindestens einer Fassung zur Aufnahme des Stichelmessers und des Versteifungselements. Zur Erreichung der damit verbundenen Vorteile wird das Stichelmesser ausgewählt und mit dem Versteifungselement in der Fassung montiert.

Überdies ist es denkbar, dass der Schritt d. ein Herstellen einer ebenen Kontaktfläche am Rohrende umfasst. Die ebene Kontakfläche wird bevorzugt mit einem an anderer Stelle beschriebenen Hobelmesser und/oder einer an anderer Stelle beschriebenen Fräseinheit hergestellt. Dies verbessert die Verbindung beim Stumpfschweißen des Rohrs und kann zusammen mit der Einbringung der Rohrinnenwandkontur erfolgen, so dass eine Zeitersparnis erreichbar ist.

In noch einer Ausgestaltung ist es denkbar, dass der Schritt d. ein Verschwenken und/oder Anheben der Hobelvorrichtung und ein Stumpfverschweißen des Rohrs umfasst. Um dies zu ermöglichen, umfasst die Maschine, wie an anderer Stelle beschrieben, mindestens eine Heizquelle. Die Vorbereitung und die Stumpfverschweißung des Rohrs, bevorzugt zweier Rohre, können auf der Maschine ohne aufwendiges Umlagern des Rohrs oder der Rohre erfolgen.

Weitere Einzelheiten, Merkmale und Vorteile der Erfindung ergeben sich aus der nachfolgenden Beschreibung der bevorzugten Ausführungsbeispiele in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen gleiche oder funktionsgleiche bzw. hinsichtlich ihrer Funktion einander entsprechende Elemente.

Es zeigen:
- Fig. 1: ein Rohrende eines zum Stumpfschweißen vorbereiteten Rohrs im schematisierten Querschnitt;
- Fig. 2: zwei Rohrenden gemäß Fig. 1 nach dem Stumpfschweißen im schematisierten Teilquerschnitt;
- Fig. 3: die Schweißnaht der beiden Rohrenden in einem vergrößerten Ausschnitt;
- Fig. 4: eine erfindungsgemäße Maschine mit einem Maschinengrundkörper, einer Planscheibe und zwei Hobelvorrichtungen umfassend zwei erste Ausgestaltungen erfindungsgemäßer Versteifungselemente mit Stichelmessern in perspektivischer Ansicht;
- Fig. 5: die Hobelvorrichtungen gemäß Fig. 4 zusammen mit dem Maschinengrundkörper und der Planscheibe in perspektivischer Ansicht;
- Fig. 6: eine zweite Ausführung eines erfindungsgemäßen Versteifungselements mit Stichelmessern in perspektivischer Ansicht;
- Fig. 7: eine dritte Ausführung dreier erfindungsgemäßer Versteifungselemente mit Stichelmessern auf einer Planscheibe in einer Draufsicht; und
- Fig. 8: die dritte Ausführung des erfindungsgemäßen Versteifungselements mit Stichelmesser in einer Draufsicht.

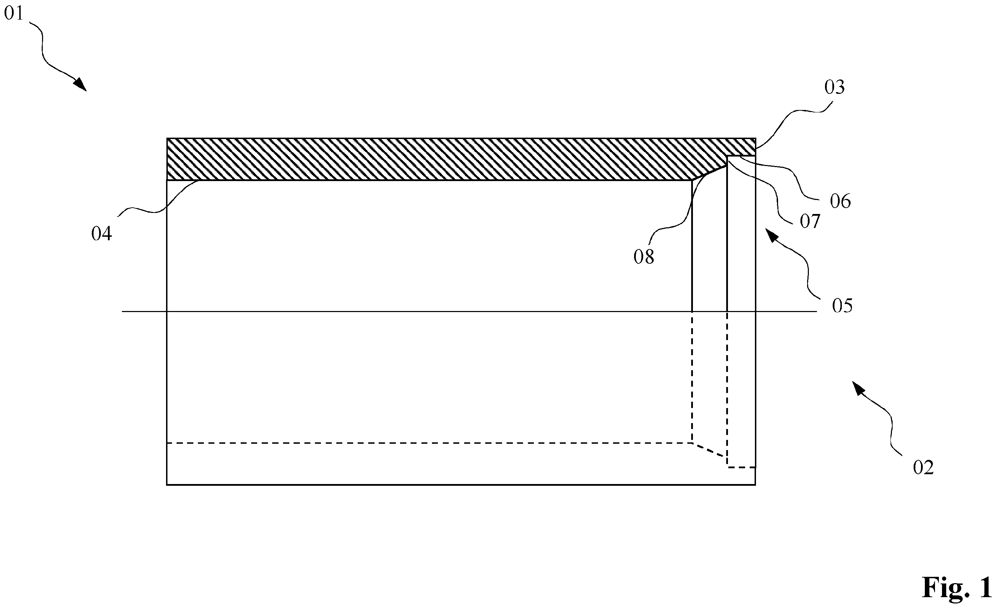

Fig. 1 zeigt ein Rohrende 02 eines Rohrs 01 aus Kunststoff im schematisierten Querschnitt. Das Rohr 01 ist zum Stumpfschweißen mit einem weiteren Rohr 01 vorgesehen, um beispielsweise eine Rohrleitung herzustellen. An einer Stirnseite des Rohrendes 02 ist eine ebene Kontaktfläche 03 vorgesehen, mit der das Rohrende 02 beim Stumpfschweißen mit einem zweiten Rohrende 02 durch Aufschmelzen des Kunststoffmaterials stoffschlüssig verbunden wird. Auf einer Innenseite 04 des Rohrs 01 ist außerdem eine Rohrinnenwandkontur 05 angebracht. In einem ersten Bereich 06 verläuft die Rohrinnenwandkontur 05 parallel zur Rohrwand, so dass die Wanddicke des Rohrs 01 im ersten Bereich 06 des Rohrendes 02, d. h. exakt im Bereich des Endquerschnitts, zumindest bereichsweise reduziert ist. Auf der zum Rohr 01 weisenden Seite des ersten Bereichs 06 schließt sich ein zweiter Bereich 07 an, in dem die Rohrinnenwandkontur 05 in radialer Richtung, das heißt senkrecht zur Rohrwand, verläuft. Daran schließt sich ein dritter Bereich 08 an, in dem eine Fase angebracht ist. Das heißt, dass die Rohrinnenwandkontur 05 im dritten Bereich 08 in einem Konturwinkel zur Rohrwand von mehr als 0° und weniger als 90° verläuft. Im dritten Bereich 08 geht die Wandstärke kontinuierlich zur Wandstärke des sonstigen Rohrs 01 über.

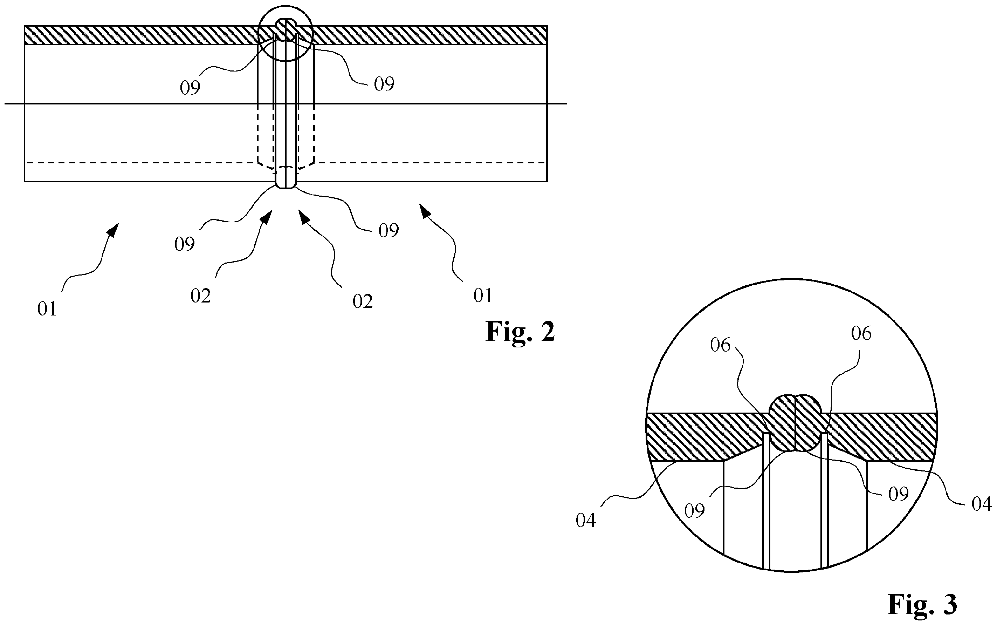

Fig. 2 zeigt zwei durch Stumpfschweißen miteinander verbundene Rohrenden 02. Durch Stumpfschweißen der beiden Rohrenden 02 befinden sich sowohl auf einer Außenseite als auch auf der Innenseite 04 der beiden Rohre 01 Schweißwülste 09. Der äußere Schweißwulst 09 steht über die Wandung der Rohre 01 an der Außenseite über, was in der Regel keine negativen Auswirkungen auf den späteren Einsatz des Rohrsystems und auf die Stabilität der Verbindung hat. Die Anordnung des inneren Schweißwulsts 09 wird nachfolgend anhand der Zeichnung in Fig. 3 näher erläutert.

Fig. 3 zeigt den inneren Schweißwulst 09 auf der Innenseite 04 der beiden Rohrenden 02. Man erkennt, dass der innere Schweißwulst 09 im ersten Bereich 06 aufgenommen ist, so dass der Leitungsquerschnitt der beiden miteinander verschweißten Rohre 01 durch den inneren Schweißwulst 09 nicht verengt wird.

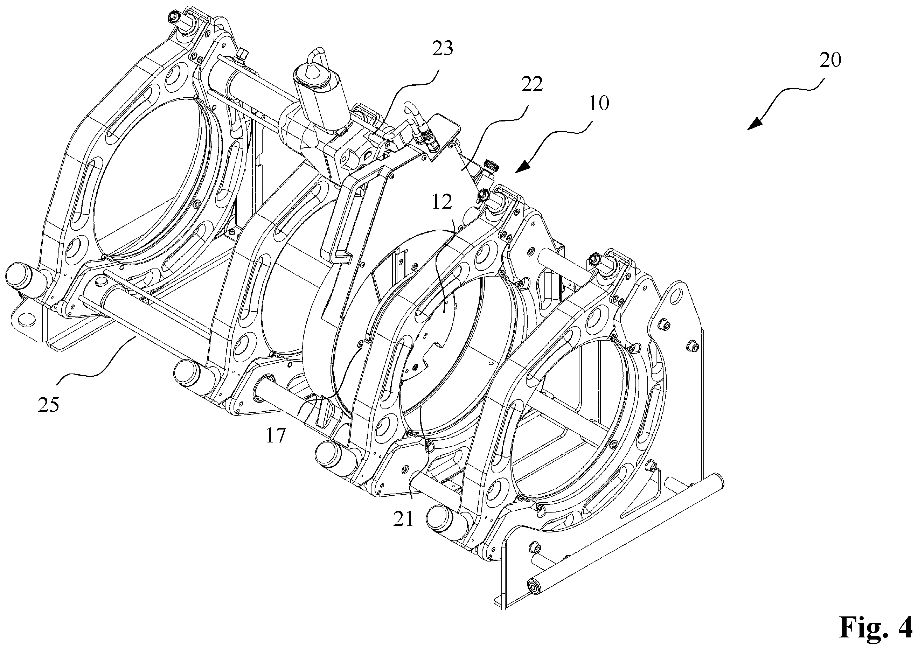

Fig. 4 zeigt eine erfindungsgemäße Maschine 20 mit einem Maschinengrundkörper 22, einer Planscheibe 21 und zwei Hobelvorrichtungen 10 umfassend zwei erfindungsgemäße Versteifungselemente 12 mit Stichelmessern 17 gemäß einer ersten Ausgestaltung in perspektivischer Ansicht. Die Maschine 20 mit den zwei Hobelvorrichtungen 10 ermöglicht es in einfacher Weise, dass sowohl die ebene Kontaktfläche 03 als auch die Rohrinnenwandkontur 05 an den Rohrenden 02 der Rohre 01 (siehe

Fig. 1 bis Fig. 3) angebracht werden können. Die Hobelvorrichtungen 10 sind beidseitig an der Planscheibe 21 angeordnet, die an einem Maschinengrundkörper 22 gelagert ist. Zum rotatorischen Antrieb der Planscheibe 21 ist ein Antriebsmotor 23 vorgesehen, dessen Drehmoment über an dem Maschinengrundkörper 22 verlaufende Übertragungselemente auf die Planscheibe 21 übertragen wird. Die Hobelvorrichtungen 10 können zusammen mit der Planscheibe 21 und dem Maschinengrundkörper 22 an einer Führungsvorrichtung 25 seitlich verschwenkt und/oder von dieser abgehoben werden, sowie entlang dieser verschoben werden.

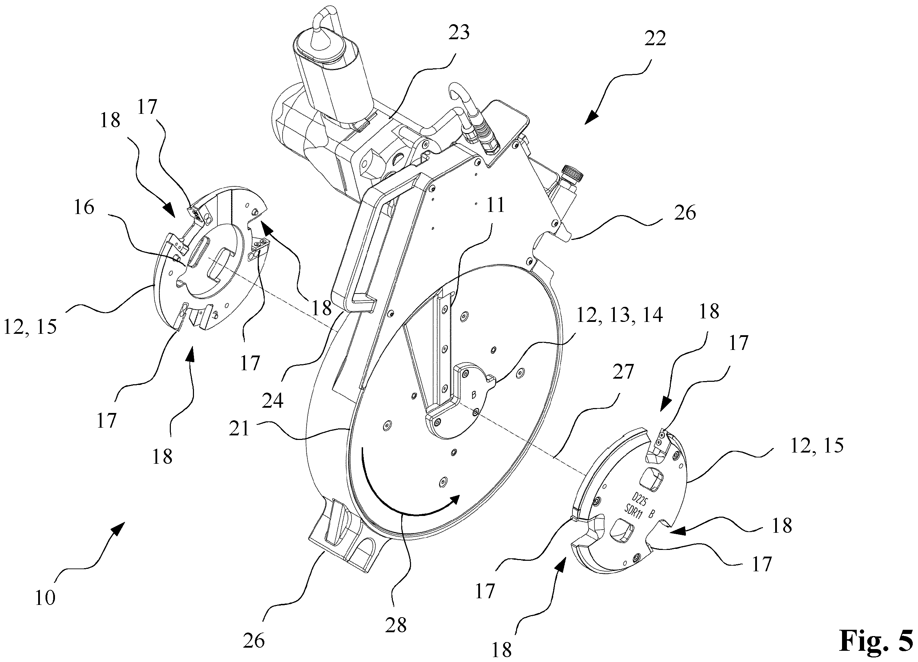

Fig. 5 zeigt die Hobelvorrichtung 10 gemäß Fig. 4 zusammen mit dem Maschinengrundkörper 22 und der Planscheibe 21 in perspektivischer Ansicht. Durch den Antriebsmotor 23 kann die Planscheibe 21 rotatorisch in Rotationsrichtung 28 um eine Mittelachse 27 angetrieben werden. Auf beiden Seiten der Planscheibe 21 befinden sich jeweils ein Hobelmesser 11 und ein scheibenförmiges Versteifungselement 12. Weiter erkennt man zwei Führungselemente 26, die auf der Führungsvorrichtung 25 (siehe Fig. 4) aufgelegt und verschoben werden können.

Das Hobelmesser 11 ist auswechselbar an der Planscheibe 21 befestigt. Das Versteifungselement 12 umfasst einen Grundkörper 13 und ein Modul 15. Das Modul 15 weist eine innenliegende Aussparung mit einer Innenkontur 16 auf, und der Grundkörper 13 weist eine außenliegende Außenkontur 14 auf. Die Außenkontur 14 ist kreissegmentförmig und weist einen Vorsprung auf. Die Innenkontur 16 weist eine an den Vorsprung angepasste Ausnehmung auf. Innenkontur 16 und Außenkontur 14 lassen sich lösbar und kraftübertragend miteinander verbinden. Am Modul 15 sind in Umfangsrichtung verteilt außenliegend Stichelmesser 17 angeordnet. Weiter sind vor den Stichelmessern 17 Hobelmäuler 18 angeordnet, durch die bei der Herstellung der Rohrinnenwandkontur 05 abgetragenes Material weggeführt werden kann.

Durch Verschieben des auf der Führungsvorrichtung 25 aufgelegten Maschinengrundkörpers 22 mittels eines Handgriffs 24 können das Hobelmesser 11 und das Stichelmesser 17 und die funktionskomplementär auf der gegenüberliegenden Seite der Planscheibe 21 angebrachten Hobelmesser 11 bzw. Stichelmesser 17 an den Rohrenden 02 zweier einander gegenüberliegend angeordneter Rohre 01 angebracht werden, um an beiden Rohrenden 02 nacheinander die ebene Kontaktfläche 03 und die Rohrinnenwandkontur 05 herzustellen.

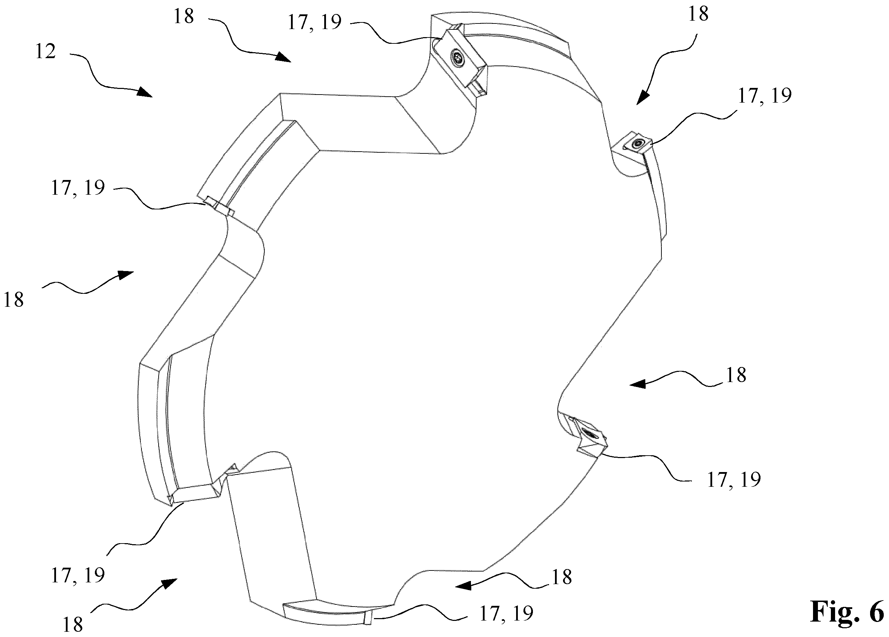

Fig. 6 zeigt eine zweite Ausführung eines erfindungsgemäßen Versteifungselements 12 mit Stichelmessern 17 in perspektivischer Ansicht. Die Stichelmesser 17 sind aus mehreren Schneidelementen 19 gebildet, die regelmäßig um den Umfang des scheibenförmigen Versteifungselements 12 verteilt sind. Die Schneidelemente 19 bilden jeweils sich zu einem Ganzen zusammensetzende Abschnitte der Schneidkontur. Vor den Schneidelementen 19 sind Hobelmäuler 18 ausgebildet.

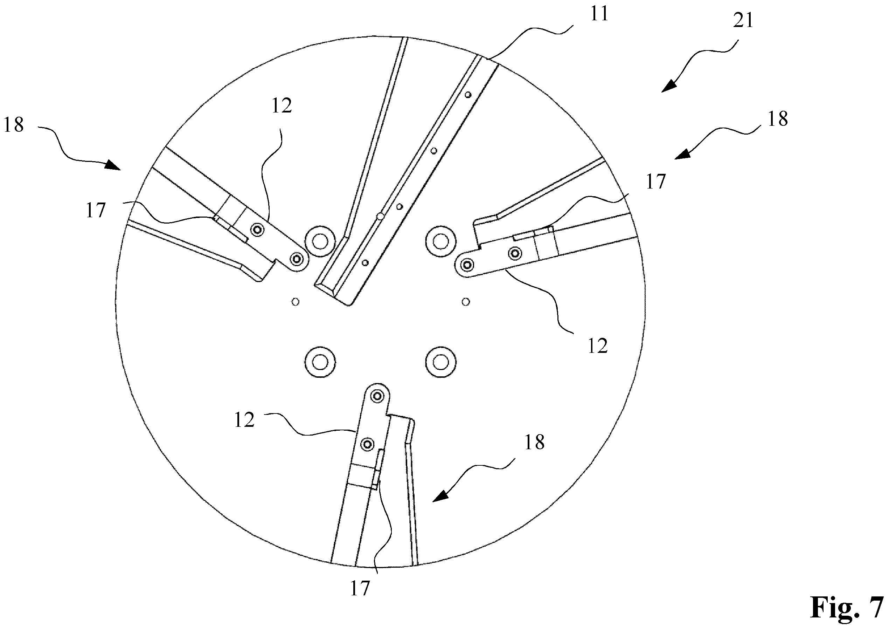

Fig. 7 zeigt eine dritte Ausführung dreier erfindungsgemäßer Versteifungselemente 12 mit Stichelmessern 17 auf einer Planscheibe 21 in einer Draufsicht. Die Versteifungselemente 12 sind blockförmig ausgestaltet. Die Versteifungselemente 12 sind mit den Stichelmessern 17 regelmäßig um einen Umfang der Planscheibe 21 verteilt. Um die Stichelmesser 17 austauschen zu können, sind die Versteifungselemente 12 in einer Fassung lösbar aufgenommen. In Rotationsrichtung vor den Stichelmessern 17 ist jeweils ein Hobelmaul 18 in Form einer Vertiefung in der Planscheibe 21 angeordnet. Auf der Planscheibe 21 ist zudem ein Hobelmesser 11 angeordnet, mittels dessen ein Rohrende eben abgeschnitten werden kann.

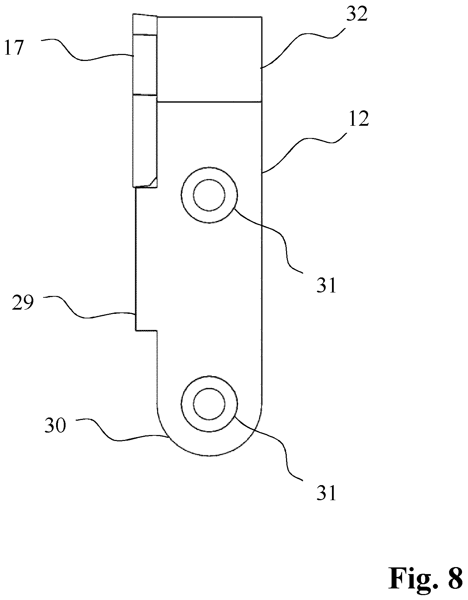

Fig. 8 zeigt die dritte Ausführung des erfindungsgemäßen Versteifungselements 12 mit Stichelmesser 17 in einer Draufsicht. Das Versteifungselement 12 weist einen Vorsprung 29 auf, an dem das Stichelmesser 17 in radialer Richtung abgestützt ist. Weiter umfasst das Versteifungselement 12 eine zur Rotationsachse weisende Abrundung 30, die auch in der Fassung ausgebildet ist. Das Versteifungselement 12 umfasst weiter zwei Ausnehmungen 31, in denen zur lösbaren Montage zwei Haltemittel, insbesondere Schrauben, aufgenommen werden können. Weiter umfasst das Versteifungselement 12 eine Fase 32 an der radial nach außen gerichteten und von der Planscheibe weg weisenden Kante.

## Patentansprüche

1. Hobelvorrichtung (10) zur Herstellung einer Rohrinnenwandkontur (05), umfassend mindestens ein Stichelmesser (17),
wobei das Stichelmesser (17) um eine Mittelachse (27) rotierbar ist, wobei das Stichelmesser (17) mindestens eine Seitenfläche und eine Schneidkante umfasst, und wobei das Stichelmesser (17) derart angeordnet ist, dass die Seitenfläche der Rotationsrichtung (28) abgewandt ist,
**dadurch gekennzeichnet,**
**dass** die Hobelvorrichtung (10) mindestens ein Versteifungselement (12) umfasst, wobei das Versteifungselement (12) um die Mittelachse (27) rotierbar ist, und wobei das Stichelmesser (17) zumindest teilweise an der Seitenfläche zum Versteifungselement (12) festgelegt ist und die Schneidkante eine der herzustellenden Rohrinnenwandkontur (05) entsprechende Schneidkontur aufweist.

2. Hobelvorrichtung (10) nach Anspruch 1,
**dadurch gekennzeichnet,**
**dass** das Versteifungselement (12) eine scheibenförmige, eine blockförmige oder eine plattenförmige Grundform aufweist.

3. Hobelvorrichtung (10) nach Anspruch 1 oder 2,
**dadurch gekennzeichnet,**
**dass** das Versteifungselement (12) mehrteilig mit mindestens einem Modul (15) und einem Grundkörper (13) ausgestaltet ist,
wobei die Schneidkante des Stichelmessers (17) außenliegend an dem Modul (15) angeordnet ist,
wobei das Modul (15) eine innenliegende Aussparung mit einer Innenkontur (16) aufweist, und wobei der Grundkörper (13) eine außenliegende Außenkontur (14) aufweist, und
wobei die Innenkontur (16) und die Außenkontur (14) lösbar und kraftübertragend verbindbar sind.

4. Hobelvorrichtung (10) nach einem der Ansprüche 1 bis 3,
**dadurch gekennzeichnet,**
**dass** die Hobelvorrichtung (10) eine Planscheibe (21) umfasst, wobei die Planscheibe (21) mindestens eine Fassung zur Aufnahme des Versteifungselements (12) umfasst.

5. Hobelvorrichtung (10) nach einem der Ansprüche 1 bis 4,
**dadurch gekennzeichnet,**
**dass** das Stichelmesser (17) mindestens ein erstes Schneidelement (19) und mindestens ein zweites Schneidelement (19) umfasst, wobei an dem ersten Schneidelement (19) ein erster Abschnitt der Schneidkontur ausgebildet ist und an dem zweiten Schneidelement (19) ein zweiter Abschnitt der Schneidkontur ausgebildet ist.

6. Hobelvorrichtung (10) nach einem der Ansprüche 1 bis 5,
**dadurch gekennzeichnet,**
**dass** die Hobelvorrichtung (10) mindestens zwei gleich oder unterschiedlich ausgestaltete Stichelmesser (17) umfasst, wobei die Stichelmesser (17) regelmäßig um den Umfang des Versteifungselements (12) verteilt sind.

7. Hobelvorrichtung (10) nach einem der Ansprüche 1 bis 6,
**dadurch gekennzeichnet,**
**dass** das Versteifungselement (12) mindestens ein Hobelmaul (18) in Rotationsrichtung (28) vor dem Stichelmesser (17) umfasst.

8. Hobelvorrichtung (10) nach einem der Ansprüche 1 bis 7,
**dadurch gekennzeichnet,**
**dass** die Schneidkante in einem Schneidwinkel zwischen 10° und 90° zur Rotationsrichtung (28) angeordnet ist.

9. Hobelvorrichtung (10) nach einem der Ansprüche 1 bis 8,
**dadurch gekennzeichnet,**
**dass** die Schneidkontur zumindest bereichsweise gekrümmt, gerade und/oder polygonförmig verläuft,
wobei die Schneidkontur bevorzugt einen ersten Bereich (06) umfasst, wobei die Schneidkontur in dem ersten Bereich (06) parallel zur Rotationsachse verläuft,
wobei die Schneidkontur bevorzugt einen sich an den ersten Bereich (06) anschließenden zweiten Bereich (07) umfasst, wobei die Schneidkontur in dem zweiten Bereich (07) senkrecht zur Rotationsachse verläuft, und
wobei die Schneidkontur bevorzugt einen sich an den zweiten Bereich (07) anschließenden dritten Bereich (08) umfasst, wobei die Schneidkontur in dem dritten Bereich (08) in einem Konturwinkel zur Rotationsachse von mehr als 0° und weniger als 90° verläuft.

10. Hobelvorrichtung (10) nach einem der Ansprüche 1 bis 9,
**dadurch gekennzeichnet,**
**dass** die Hobelvorrichtung (10) ein Hobelmesser (11) und/oder eine Fräseinheit zur Herstellung einer ebenen Kontaktfläche (03) am Rohrende (02) umfasst,
wobei das Versteifungselement (12) eine Eingriffsausnehmung umfasst, die oberhalb des Hobelmessers (11) und/oder der Fräseinheit angeordnet ist.

11. Maschine (20) umfassend mindestens eine Hobelvorrichtung (10) nach einem der Ansprüche 1 bis 10.

12. Maschine (20) nach Anspruch 11,
**dadurch gekennzeichnet,**
**dass** die Maschine (20) eine um die Mittelachse (27) rotierende Planscheibe (21) umfasst, wobei beidseitig von der Planscheibe (21) jeweils eine Hobelvorrichtung (10) angeordnet ist, und/oder dass die Maschine (20) eine Sensorik umfassend mindestens einen Sensor zur Abmessung mindestens eines Rohrendes (02), mindestens einer Rohrinnenwandkontur (05) und/oder einer Verbindung zweier Rohrenden (02) umfasst.

13. Rohr (01) umfassend mindestens eine Rohrinnenwandkontur (05), hergestellt mit einer Hobelvorrichtung (10) nach einem der Ansprüche 1 bis 10.

14. Verfahren zur Einbringung einer Rohrinnenwandkontur (05) in ein Rohr (01), umfassend folgende Schritte:
a. Bereitstellen einer Maschine (20) gemäß Anspruch 11 oder 12 und mindestens eines Rohrs (01) mit einer Mittelachse;
b. Ausrichten der Mittelachsen (27) des Rohrs (01) und der Hobelvorrichtung (10);
c. In Kontakt Bringen von Rohr und Hobelvorrichtung (10) und Rotieren der Hobelvorrichtung (10); und
d. Bewegen der Hobelvorrichtung (10) entlang der Mittelachsen (27) in Richtung des Rohrs (01) und/oder Bewegen des Rohrs (01) entlang der Mittelachse (27) in Richtung der Hobelvorrichtung, und Einbringen der Rohrinnenwandkontur in die Rohrinnenwand mit dem Stichelmesser (17).

15. Verfahren nach Anspruch 14,
wobei der Schritt a. ein Auswählen eines Moduls (15) und ein Verbinden des ausgewählten Moduls (15) mit dem Grundkörper (13), ein Auswählen mindestens eines Stichelmessers (17) und eines Versteifungselements (12) und Montieren des Versteifungselements (12) mit dem Stichelmesser (17) in einer Fassung und/oder ein Auswählen mindestens eines Schneidelements (19) und ein Zusammensetzen des Stichelmessers (17) umfasst.
